# EUROPEAN PATENT APPLICATION

(11) **EP 4 813 190 A1**
(43) Date of publication of application: **30.09.2026**
(21) Application number: 25166986.7
(22) Date of filing: 28.03.2025
(51) Int. Cl.: A01C 23/04, C05D 1/00, C05D 9/02, C05G 5/23, C05G 3/40, C05B 13/06

(54) **INORGANIC NUTRIENT COMPOSITION SUITABLE FOR FERTIGATION**

(71) Applicant: Prayon, 4480 Engis (BE)
(72) Inventor: Delvaux, Marc, 4480 Engis (BE); Pinxteren, Dave, 4480 Engis (BE); Barthakur, Akash, 110070 New Delhi (IN); Wattiez, Xavier, 4480 Engis (BE)
(74) Representative: Gevers Patents

(57) **Abstract**

The present invention relates to a solid inorganic nutrient composition suitable for fertigation [composition (C), herein after] comprising at least one polyphosphate and comprising, relative to the total weight of the composition (C): from 0.50 to 20.00 % by weight [wt. %, herein after] of at least one micronutrient selected from the group consisting of manganese, zinc, molybdenum, copper, boron, cobalt and mixture thereof; and from 20.00 to 60.00 wt.% of potassium, expressed as K₂O; and equal to or less than 1.00 wt. % of nitrogen; and from 35.00 to 50.00 wt.% of total phosphorus, expressed as P₂O₅, [P₂O₅ tot, herein after] wherein at least 95.00 wt.% of P₂O₅ tot is water-soluble, according to the standard EN 15958:2011.

## Description

The present invention relates to a solid inorganic nutrient composition which is suitable for fertigation.

### BACKGROUND OF THE INVENTION

Modern horticulture practices often optimize nutrient composition in order to bring the required amounts of nutrients to the plants.

It is common general knowledge that nitrogen, potassium and phosphate are among the most important nutrients for plants and are generally called macronutrients. Other nutrients, also called oligo-elements, trace elements or micronutrients, such as iron, boron, manganese, zinc, copper, nickel and molybdenum, may be used in lower contents. The micronutrients are important for plants grow and other activities of their life cycle. Some of the micronutrients such as iron and zinc, in addition to be an essential element for all plants, also play an important role in human metabolism and contributes to good health.

Micronutrients cannot be readily absorbed by plants if they precipitate, so that a supporting mechanism is needed for the micronutrients to be bioavailable for plants.

In addition, in the field of fertigation, relating to the method of injecting water-soluble nutrients or fertilizers in an irrigation system, precipitates (also called insolubles) need to be prevented to avoid clogging of the irrigation system. Indeed, fertigation is a specific field of the horticulture industry and relates to a method of injecting nutrients, used for soil amendments and other water-soluble products into an irrigation system. This irrigation system is designed to apply an aqueous solution to the soil through various systems of tubes, pumps, and sprays. Therefore, precipitates must be avoided in the aqueous solution in order to prevent any clogging of the irrigation system which would cause damage to the system and stop the supply of nutrients to plant which jeopardizes the harvest.

Different strategies have been developed in order to try to overcome this issue. A common solution is to use organic chelating agents, in particular organic chelating agents containing at least one amine group, such as for example: ethylenediaminetetraacetic acid (EDTA) or ethylenediamine-N,N'-bis(2-hydroxyphenylacetic acid) (EDDHA), diethylenetriaminepentaacetic acid (DTPA), ethylenediamine-N,N'-bis(2-hydroxyphenylacetic acid) (HEDTA), N,N'-bis(2-hydroxybenzyl)ethylenediamine-N,N'-diacetic acid (HBED), imidodisuccinic acid (IDHA), 2-2-[bis(carboxymethyl)amino]ethyl-(2-hydroxyethyl)amino]acetic acid (HEEDTA), ethylenediaminedi(o-hydroxy-p-methylphenylacetic) acid (EDDHMA), ethylenediaminedi(2-hydroxy-5-sulfophenylacetic) acid (EDDHSA), and ethylenediaminedi(5-carboxy-2-hydroxyphenylacetic) acid (EDDCHA). The chelating agent forms stable and soluble complexes with the micronutrients thus increasing their availability. Of all the above-mentioned chelating agents, EDTA is the most commonly used. However, many users are becoming reluctant to use synthetic organic chemicals in nutrient compositions, as some of these agents, such as EDTA, have a low biodegradability and have been shown to end up in deeper soil layers (EDTA application on agricultural soils affects microelement uptake of plants, E. Bloem et al., DOI:10.1016/j.scitotenv.2016.10.153). Furthermore, it is known that at least some of the above chelating agents can degrade under certain conditions such as UV radiations. As a result, the micronutrients in the administered nutrient compositions are no longer chelated and will precipitate.

However, in view of the specific requirements of fertigation industry, developing new compositions in this field is very challenging. For this reason, at the moment, a lot of synthetic organic chemicals are used in horticulture practices.

Furthermore, nutrient composition may be used in different applications such as foliar, open-field, soil or greenhouse. For some applications such as open-field and soil application, the pH of the soil, namely its alkalinity, may influence the formation of precipitates. It is thus challenging to provide a nutrient composition which can be used efficiently on a wide variety of fields and soils.

In view of the above, there is a strong need for an improved composition for use in fertigation, which allows delivering nutrients to plants, which composition contains nutrient that is absorbable by and bio-available to plants. There is a need for said composition to be able to provide further nutritive elements to plants, and to be easy and safe to use, deliver and transport. Furthermore, there is a need for the nutrient composition to be deliverable to the plant via fertigation, in soilless and soil applications. There is a further need for these nutrient compositions to be substantially free of chelating agents containing amine groups such as those components mentioned here above.

### SUMMARY OF THE INVENTION

The inventors have surprisingly found that the inorganic nutrient composition according to the present invention fulfils the above mentioned needs and overcomes the above mentioned disadvantages.

In an aspect of the present invention, there is provided a solid inorganic nutrient composition suitable for fertigation [composition (C), herein after] comprising at least one polyphosphate and comprising, relative to the total weight of the composition:
- from 0.50 to 20.00 % by weight [wt. %, herein after] of at least one micronutrient selected from the group consisting of manganese, zinc, molybdenum, copper, boron, cobalt and mixture thereof; and
- from 20.00 to 60.00 wt.% of potassium, expressed as K₂O; and
- equal to or less than 1.00 wt. % of nitrogen; and
- from 35.00 to 50.00 wt.% of total phosphorus, expressed as P₂O₅, [P₂O₅ tot, herein after] wherein at least 95.00 wt. % of P₂O₅ tot is water-soluble, according to the standard EN 15958:2011.

### DETAILED DESCRIPTION

As used herein and in the claims, the terms "comprising" and "including" are inclusive or open-ended and do not exclude additional unrecited elements, compositional components, or method steps. Accordingly, the terms "comprising" and "including" encompass the more restrictive terms "consisting essentially of" and "consisting of".

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising A and B" should not be limited to the composition consisting only of A and B. It means that with respect to the present invention, the only relevant components of the composition are A and B. Accordingly, the terms "comprising" and "including" encompass the more restrictive terms "consisting essentially of" and "consisting of".

As used herein, the terms "optional" or "optionally" means that a subsequently described event or circumstance can or cannot occur, and that the description includes instances where said event or circumstance occurs and instances where it does not.

Unless otherwise mentioned or indicated, it is to be understood that within the context of the present invention, the temperature is the room temperature. Within the context of the present invention, the expression "room temperature", is intended to denote a temperature comprised between 20 and 30 °C, preferably comprised between 20 and 25 °C, more preferably a temperature of 20 °C. In other words, when parameters and measurement methods are listed in the present description, the definition of temperature given above applies. This does not exclude the fact that the present invention can be carried out at other temperatures. In these conditions, the results are likely to be different, which must be taken into account by the skilled person in the art.

Thus, the solid inorganic nutrient composition suitable for fertigation [composition (C), herein after] according to the present invention, comprises at least one polyphosphate and comprises, relative to the total weight of the composition:
- from 0.50 to 20.00 % by weight [wt. %, herein after] of at least one micronutrient selected from the group consisting of manganese, zinc, molybdenum, copper, boron, cobalt and mixture thereof; and
- from 20.00 to 60.00 wt.% of potassium, expressed as K₂O; and
- equal to or less than 1.00 wt. % of nitrogen; and
- from 35.00 to 50.00 wt.% of total phosphorus expressed as P₂O₅, [P₂O₅ tot, herein after], wherein at least 95.00 wt.% of P₂O₅ tot is water-soluble, according to the standard **EN** 15958:2011.

For the purpose of the present invention, the term "solid" is intended to refer to a composition in the form of powders, fibers, dusts, tablets, pellets, aggregates, compacts or briquettes or a granular form such as granules or crumbs.

Preferably, the composition (C) is in the form of a powder, granules or mixture thereof. Preferably, the composition (C) is in the form of a powder.

Within the context of the present invention, the term "powder" is intended to refer to any solid in a powder, granular, fragmented or equivalent state, with an average particle size of less than five millimeters (5 mm). For example, the term "powder" refers to a powder, fragments, particles, flakes, granules, grains or other components with an average particle size of less than 5 mm.

It is to be understood that the expression "particle size" is intended to refer to the average diameter of the particles.

As said, the composition according to the present invention is an inorganic composition. In other words, the composition (C) is substantially free of organic compound. In general, organic compounds used in fertigation may be organic chelating agents, in particular containing at least one amine group. Non-limiting examples of organic chelating agents notably include EDTA, EDDHA, DTPA, HEDTA, HBED, IDHA, HEEDTA, EDDHMA, EDDHSA and EDDCHA.

Within the context of the present invention, the term "substantially free of organic compound" is intended to denote that less than 1.00 wt.%, in particular less than 0.50 wt.%, more in particular less than 0.10 wt.%, most preferably less than 0.010 wt.% of organic compound is present in the composition (C), relative to the total weight of the composition (C).

According to the present invention, the composition (C) is suitable for fertigation. In other words, the present invention relates to a composition (C) suitable to be used as nutrient composition in fertigation. In general, the expression "fertigation", refers to the method of injecting soluble nutrients in an irrigation system. It is understood that the solid nutrient composition is dissolved in an aqueous solution before its injection in the irrigation system. It does not exclude that the composition (C) may be used in other methods used in horticulture.

Non-limiting examples of methods used in fertigation notably include drip irrigation and sprinkler systems. Non-limiting examples of applications where the composition (C) according to the present invention may be used notably include foliar, open-field, soil and greenhouse.

Preferably, the composition (C) according to the present invention is particularly suitable to be used in open field and greenhouse applications, more preferably in open field application.

As said, the composition (C) according to the present invention comprises equal to or less than 1.00 wt. % of nitrogen, relative to the total weight of the composition (C). It goes without saying that the term "nitrogen" refers to the atomic nitrogen, N. Nitrogen may be provided to the composition (C) by at least one compound comprising at least one nitrogen (nitrogen atom). Within the context of the present invention, the expression "at least one compound comprising at least one nitrogen" is intended to denote one micronutrient or more than one compound comprising at least one nitrogen. Mixtures of compound comprising at least one nitrogen may be used. The compound comprising at least one nitrogen may be organic or inorganic. Non-limiting examples of organic compounds comprising at least one nitrogen notably include chelating agents containing at least one amine group, as detailed above, urea and their derivatives.

Non limiting examples of inorganic compound comprising at least one nitrogen nitrate salt, ammonium salt, ammonia and their derivatives. Non limiting examples of nitrate salt notably include ammonium nitrate, sodium nitrate, potassium nitrate, and calcium nitrate. Non-limiting examples of ammonium salt notably include ammonium sulphate, ammonium chloride, ammonium phosphates, ammonium polyphosphates and their mixture. Typical ammonium salt used in the field of horticulture, are for example named NPK 10-34-00, NPK 14-48-00 and NPK 11-57-00.

Advantageously, the composition (C) according to the present invention comprises equal to or less than 0.80 wt. %, preferably equal to or less than 0.60 wt. %, preferably equal to or less than 0.40 wt. %, more preferably equal to or less than 0.20 wt. %,preferably equal to or less than 0.10 wt. %, even more preferably equal to or less than 0.05 wt. %, most preferably less than 0.010 wt.% of nitrogen, relative to the total weight of the composition (C). In other words, the composition (C) is substantially free of nitrogen.

Preferably, nitrogen is excluded from the composition (C) according to the present invention. Preferably, nitrogen provided by compound comprising at least one nitrogen, as detailed above, is excluded from the composition (C) according to the present invention.

### Micronutrient

As said, according to the invention, the composition (C) comprises, relative to the total weight of the composition (C), from 0.50 to 20.00 % by weight [wt. %, herein after] of at least one micronutrient selected from the group consisting of manganese, zinc, molybdenum, copper, boron, cobalt and mixture thereof. Preferably, the micronutrient selected from the group consisting of manganese, zinc, molybdenum, copper, cobalt and mixture thereof.

It goes without saying that the content of micronutrient refers to the atomic content, namely atomic Mn, atomic Zn, atomic, Mo, atomic Cu, atomic B and atomic Co, respectively.

Within the context of the present invention, the expression "at least one micronutrient" is intended to denote one micronutrient or more than one micronutrient. Mixtures of micronutrients may be used.

In general, a micronutrient needs to be bioavailable so that organisms, in particular plants, can take them or absorb them and assimilate or process them further. In general, the skilled in the art knows how to select the micronutrient to provide an inorganic nutrient composition as detailed above

Preferably, the micronutrient is selected from the group consisting of zinc, manganese and mixture thereof. Preferably, the micronutrient is zinc.

In the context of the present invention, any source of micronutrient which is capable of providing micronutrient, as detailed above, may be used. Preferably, the source of micronutrient is an inorganic source of micronutrient.

For example, micronutrient can be provided to the composition (C) by means of at least one micronutrient salt. Within the context of the present invention, the expression "at least one micronutrient salt" is intended to denote one micronutrient salt or more than one micronutrient salt. Mixtures of micronutrient salt may be used.

In general, micronutrient salts are known to the skilled person in the art. Non-limiting examples of micronutrient salts notably include chloride salt, sulfate salt, nitrate salt, phosphate salt, ammonium sulfate salt, oxide salt, oxysulfate salt. Preferably, micronutrient salts include chloride salt, sulfate salt, phosphate salt, ammonium sulfate salt, oxide salt, oxysulfate salt. Within the context of the present invention, micronutrient salts may be in an anhydrous form and/or in a hydrated form.

Advantageously, when the micronutrient is manganese, the manganese may be provided to the composition (C) by means of at least one manganese salt selected from the group consisting of manganese sulfate, manganese oxide, manganese chloride, ammonium manganese phosphate and mixture thereof. Preferably, manganese is provided to the composition (C) by means of at least one manganese salt selected from the group consisting of manganese sulfate, manganese chloride, manganese oxide, and mixture thereof. Manganese sulfate is specially preferred.

When manganese is provided to the composition (C) by means of a manganese sulfate salt, said manganese sulfate salt may be MnSO₄.xH₂O wherein x ranges from 0 to 6, and mixture thereof.

When manganese is provided to the composition (C) by means of a manganese nitrate salt, said manganese nitrate salt may be Mn(NO₃)₂.xH₂O wherein x ranges from 0 to 6. When manganese is provided to the composition (C) by means of a manganese oxide salt, said manganese oxide salt may be MnyOz.xH₂O wherein x ranges from 0 to 6, y ranges from 1 to 7 and z ranges from 1 to 13.

When manganese is provided to the composition (C) by means of a manganese chloride salt, said manganese chloride salt may be MnCl₂.xH₂O wherein x ranges from 0 to 4.

Advantageously, when the micronutrient is zinc, the zinc is provided to the composition (C) by means of at least one zinc salt selected from the group consisting of consisting of zinc sulfate, zinc oxide, zinc oxysulfate, zinc phosphate, zinc chloride, ammonium zinc sulfate, ammonium zinc phosphate and mixture thereof. Preferably, zinc is provided to the composition (C) by means of at least one zinc salt selected from the group consisting of zinc sulfate, zinc oxide, zinc chloride and mixture thereof. Zinc sulfate is specially preferred.

When zinc is provided to the composition (C) by means of a zinc sulfate salt, said zinc sulfate salt may be ZnSO₄.xH₂O wherein x ranges from 0 to 7 and mixture thereof.

When zinc is provided to the composition (C) by means of a zinc nitrate salt, said zinc nitrate salt may be Zn(NO₃)₂.xH₂O wherein x ranges from 0 to 6.

Advantageously, when the micronutrient is copper, the copper is provided to the composition (C) by means of at least one copper salt selected from the group consisting of copper sulfate, copper hydroxide, copper chloride, copper ammonium phosphate, double salt of copper chloride and copper hydroxide and mixture thereof. Preferably, copper is provided to the composition (C) by means of at least one zinc salt selected from the group consisting of copper sulfate, copper hydroxide, copper chloride, and mixture thereof.

Advantageously, the composition (C) comprises, equal to or more than 0.60 wt. %, preferably equal to or more than 1.00 wt. %, preferably equal to or more than 1.20 wt. %, or equal to or more than 1.50 wt. %, of micronutrient, relative to the total weight of the composition (C).

It is further understood that the upper limit of micronutrient in the composition (C) is advantageously equal to or less than 20.00 wt. %, preferably equal to or less than 15.00 wt. %, preferably equal to or less than 10.00 wt. %, or equal to or less than 7.00 wt. %, or equal to or less than 5.00 wt. %, or equal to or less than 4.00 wt.%, or equal to or less than 3.00 wt.%, or equal to or less than 2.00 wt.%, relative to the total weight of the composition (C).

In an embodiment of the composition of the present invention, the micronutrient, as detailed above, is present in the composition (C) in an amount from 0.50 wt. % to 20.00 wt. %, preferably from 0.50 wt. % to 15.00 wt. %, preferably from 0.50 wt. % to 10.0 wt. %, or from 0.6 wt. % to 7.00 wt. %, or from 1.00 wt. % to 5.00 wt. % or from 1.00 wt. % to 4.00 wt. %, or from 1.50 wt. % to 4.00 wt. %, or from 1.00 wt. % to 3.00 wt. %, or from 1.00 wt. % to 2.00 wt. %, or 1.50 wt.% to 3.00 wt. % or from 1.50 wt.% to 2.00 wt.%, relative to the total weight of the composition (C).

Advantageously when the micronutrient is zinc, the composition (C) comprises, equal to or more than 0.60 wt. %, preferably equal to or more than 1.00 wt. %, preferably equal to or more than 1.20 wt. %, or equal to or more than 1.50 wt. %, of zinc, relative to the total weight of the composition (C).

Advantageously, it is further understood that when the micronutrient is zinc the upper limit of zinc in the composition (C) is advantageously equal to or less than 20.00 wt. %, preferably equal to or less than 15.00 wt. %, preferably equal to or less than 10.00 wt. %, or equal to or less than 7.00 wt. %, or equal to or less than 5.00 wt. %, or equal to or less than 4.00 wt.%, or equal to or less than 3.00 wt.%, or equal to or less than 2.00 wt.%, relative to the total weight of the composition (C).

Advantageously when the micronutrient is manganese, the composition (C) comprises, equal to or more than 0.60 wt. %, preferably equal to or more than 1.00 wt. %, preferably equal to or more than 1.20 wt. %, or equal to or more than 1.50 wt. %, of manganese, relative to the total weight of the composition (C).

Advantageously, it is further understood that when the micronutrient is manganese the upper limit of manganese in the composition (C) is advantageously equal to or less than 20.00 wt. %, preferably equal to or less than 15.00 wt. %, preferably equal to or less than 10.00 wt. %, or equal to or less than 7.00 wt. %, or equal to or less than 5.00 wt. %, or equal to or less than 4.00 wt.%, or equal to or less than 3.00 wt.%, or equal to or less than 2.00 wt.%, relative to the total weight of the composition (C).

Advantageously when the micronutrient is zinc and manganese, the composition (C) comprises, equal to or more than 0.60 wt. %, preferably equal to or more than 1.00 wt. %, preferably equal to or more than 1.20 wt. %, or equal to or more than 1.50 wt. %, of zinc and manganese, relative to the total weight of the composition (C).

Advantageously, it is further understood that when the micronutrient is zinc and manganese the upper limit of zinc and manganese in the composition (C) is advantageously equal to or less than 20.00 wt.%, preferably equal to or less than 15.00 wt. %, preferably equal to or less than 10.00 wt. %, or equal to or less than 7.00 wt. %, or equal to or less than 5.00 wt. %, or equal to or less than 4.00 wt.%, or equal to or less than 3.00 wt.%, or equal to or less than 2.00 wt.%, relative to the total weight of the composition (C).

Preferably, the micronutrient is in the form of a powder, granule or mixture thereof. It is further understood that the definition of powder, as described above, equally apply for the micronutrient.

Advantageously, the micronutrient, as detailed above, has a d₉₇ particle size value equal to or less than 100.00 µm, preferably equal to or less than 97.00 µm, more preferably equal to or less than 95.00 µm, preferably equal to or less than 92.00 µm, more preferably equal to or less than 90.00 µm, even more preferably equal to or less than 87.00 µm, more preferably equal to or less than 85.00 µm, preferably equal to or less than 82.00 µm, most preferably equal to or less than 80.00 µm.

It is further understood that the lower limit of the d₉₇ particle size value of the micronutrient, as detailed above, is equal to or more than 15.00 µm, preferably equal to or more than 20.00 µm, equal to or more than 25.00 µm, equal to or more than 30.00 µm, equal to or more than 35.00 µm, equal to or more than 40.00 µm, equal to or more than 45.00 µm, equal to or more than 50.00 µm, equal to or more than 55.00 µm.

In an embodiment of the composition of the present invention, the micronutrient, as detailed above, has a d₉₇ particle size value from 15.00 µm to 100.00 µm, preferably from 20.00 µm to 97.00 µm, preferably from 25.00 µm to 95.00 µm, preferably from 30.00 µm to 92.00 µm, preferably from 35.00 µm to 90.00 µm, preferably from 40.00 µm to 87.00 µm, preferably from 45.00 µm to 85.00 µm, preferably from 50.00 µm to 82.00 µm, preferably from 55.00 µm to 80.00 µm.

Within the context of the present invention, the expression "dₓ of y µm" is intended to refer to a particle size distribution (PSD) and to denote that a percentage (x%) by weight of particles has a particle size equal to or less than y µm.

In general, the particle size distribution of particles can be measured by known method in the art such as Dynamic Light Scattering (DLS), dry or wet mechanical sieving, or laser diffraction analysis. For example, the particle size distribution of the particles of the micronutrient of the composition (C) may be measured by mechanical sieving according to EN ISO 1927-3 (2013) standard or by laser diffraction analysis.

### Potassium

A said, according to the composition (C) comprises from 20.0 to 60.0 wt.% of potassium, expressed as K₂O, relative to the total weight of the composition (C).

It is of general knowledge that potassium as mentioned herein contributes to the supply of macronutrients needed by plant organisms.

The skilled in the art knows how to provide potassium in the composition (C) as detailed above.

In the context of the present invention, any source of potassium which is capable of providing potassium, as detailed above, may be used. Preferably, the source of potassium is an inorganic source of potassium.

For example, potassium can be provided to the composition (C) by means of at least one potassium salt. Within the context of the present invention, the expression "at least one potassium salt" is intended to denote one potassium salt or more than potassium salt. Mixtures of potassium salt may be used.

In general, potassium salts are known to the skilled person in the art. Non-limiting examples of potassium salts notably include chloride salt, sulfate salt, nitrate salt, phosphate salt. Preferably, the potassium salt is selected from the group consisting of chloride salt, sulfate salt and phosphate salt. Within the context of the present invention, potassium salts may be in an anhydrous form and/or in a hydrated form.

Advantageously, potassium salts may be chosen in the group of potassium chloride, potassium sulfate, potassium nitrate, potassium orthophosphate, potassium polyphosphate. Preferably, potassium polyphosphate is selected from the group consisting of potassium pyrophosphate, potassium tripolyphosphate and mixture thereof. Within the context of the present invention, potassium salts may be a single salt or a double salt. Non-limiting examples of potassium orthophosphate notably include monopotassium phosphate (MKP), dipotassium phosphate (DKP), hemipotassium phosphate (HKP) and mixture thereof. Non-limiting examples of potassium polyphosphate notably include tetrapotassium pyrophosphate (TKPP), potassium tripolyphosphate (KTPP), double salt of potassium and sodium pyrophosphate, double salt of potassium and sodium tripolyphosphate and mixtures thereof.

Advantageously, the composition (C) comprises, equal to or more than 25.00 wt. %, preferably equal to or more than 30.00 wt.%, preferably equal to or more than 35.00 wt. %, preferably equal to or more than 40.00 wt. %, or equal to or more than 42.00 wt. %, or equal to or more than 43.00 wt. %, or equal to or more than 44.00 wt. %, of potassium, expressed as K₂O, relative to the total weight of the composition (C).

It is further understood that the upper limit of potassium, expressed as K₂O, in the composition (C) is advantageously equal to or less than 55.00 wt.%, preferably equal to or less than 54.00 wt. %, or equal to or less than 53.00 wt. %, or equal to or less than 52.00 wt. %, relative to the total weight of the composition (C).

In an embodiment of the composition of the present invention, potassium, expressed as K₂O, as detailed above, is present in the composition (C) in an amount from 25.00 wt. % to 60.00 wt. %, preferably from 30.00 wt. % to 60.00 wt.%, preferably from 25.00 wt.% to 55.00 wt. %, preferably from 30.00 wt. % to 54.00 wt. %, preferably from 35.00 wt. % to 54.00 wt. %, preferably from 40.00 wt. % to 54.00 wt. %, or from 41.00 wt. % to 54.00 wt. %, or from 42.00 wt. % to 53.00 wt. %, or from 43.00 wt. % to 52.00 wt. %, relative to the total weight of the composition (C).

Preferably, the potassium is in the form of a powder, granule or mixture thereof. It is further understood that the definition of powder, as described above, equally apply for the potassium.

### Polyphosphate

A said, according to the present invention, the composition (C) comprises at least one polyphosphate.

Within the context of the present invention, the expression "at least one polyphosphate" is intended to denote one polyphosphate or more than one polyphosphate. Mixtures of polyphosphate may be used.

For the purpose of the invention, the term "polyphosphate" refers herein to a salt of a polyphosphoric acid whatever the process to produce it, wherein the term "polyphosphoric acid" refers herein to compounds having the general formula:

*HO*[*P*(*OH*)(*O*)*O*]*ₙH* (1)

wherein n>1. When n equals 2, the polyphosphoric acid can also be called "pyrophosphoric acid" herein, and its salts "pyrophosphates". When n equals 3, the polyphosphoric acid can also be called "tripolyphosphoric acid" herein, and its salts "tripolyphosphates". It will however be understood that the term "polyphosphoric acid" may also relate herein to and thus may include any compound of formula (1), wherein n equals, or is more than two. On the contrary, when n=1, the compound of formula (1) is called an "orthophosphoric acid" and its salts "orthophosphates". For the purpose of the present invention, the term "polyphosphate" excludes the orthophosphates, namely the compound of formula (1) where n =1.

Preferably, the polyphosphate is selected from the group consisting of pyrophosphate, tripolyphosphate and mixture thereof. It is understood that the polyphosphate consists mainly of a polyphosphate. In other words, the polyphosphate according to the present invention may comprise less than 3.00 wt.%, preferably less than 2.00 wt.%, more preferably less than 1.00 wt.% of other compounds, relative to the total weight of the polyphosphate.

Non-limiting examples of pyrophosphates notably include tetrapotassium pyrophosphate (TKPP), tetrasodium pyrophosphate (TSPP) and double salt of potassium and sodium pyrophosphate.

Non-limiting examples of tripolyphosphates notably include potassium tripolyphosphate (KTPP) and sodium tripolyphosphate (STPP) and double salt of potassium and sodium tripolyphosphate.

The skilled in the art knows how to provide polyphosphate in an inorganic nutrient composition as detailed above.

In the context of the present invention, any source of polyphosphate which is capable of providing polyphosphate, as detailed above, may be used. Preferably, the source of polyphosphate is an inorganic source of polyphosphate.

For example, polyphosphate can be provided to the composition (C) by means of at least one polyphosphate salt. Within the context of the present invention, the expression "at least one polyphosphate salt" is intended to denote one polyphosphate salt or more than polyphosphate salt. Mixtures of polyphosphate salts may be used. Within the context of the present invention, polyphosphate salts may be single salts or a double salts.

In general, polyphosphate salts are known to the skilled person in the art. Non-limiting examples of polyphosphate salts notably include sodium polyphosphate, potassium polyphosphate and double salt of sodium potassium polyphosphate.

Preferably, the polyphosphate is provided to the composition (C) by means of at least one polyphosphate salt selected from the group consisting of sodium polyphosphate, potassium polyphosphate, potassium sodium polyphosphate and mixture thereof. Within the context of the present invention, polyphosphate salts may be in an anhydrous form and/or in a hydrated form.

Preferably, the polyphosphate is selected from the group consisting of tetrapotassium pyrophosphate (TKPP), potassium tripolyphosphate (KTPP), sodium tripolyphosphate (STPP), tetrasodium pyrophosphate (TSPP) and mixtures thereof.

It is understood that when the polyphosphate is provided to the composition (C) by means of potassium polyphosphate such as potassium tripolyphosphate (KTPP), this potassium polyphosphate may also provide potassium to the composition (C), as detailed above.

As said, the composition (C) according to the present invention has, relative to the total weight of the composition (C), from 35.00 to 50.00 wt.% of total phosphorus, expressed as P₂O₅, [P₂O₅ tot, herein after] wherein at least 95.00 wt.% of P₂O₅ tot is water-soluble, according to the standard EN 15958:2011. It is to be understood that the expression "total phosphorus", P₂O₅ tot, is intended to denote the total amount in weight of phosphorus in the composition (C). In other words, the total amount in weight of phosphorus, P₂O₅ tot, in the composition refers to the sum of the amount in weight of phosphorus in the form of polyphosphate, expressed as P₂O₅, [P₂O₅ poly, herein after] and the amount in weight of phosphorus in the form of orthophosphate [P₂O₅ ortho, herein after] in the composition (C). It is to be understood that : ${P}_{2} {O}_{5} tot = {P}_{2} {O}_{5} poly + {P}_{2} {O}_{5} ortho$ Wherein
- P₂O₅ tot refers to the total amount in weight of phosphorus, expressed as P₂O₅, in the composition (C); and
- P₂O₅ poly refers to the amount in weight of phosphorus, expressed as P₂O₅, in the form polyphosphate in the composition (C); and
- P₂O₅ ortho refers to the amount in weight of phosphorus, expressed as P₂O₅, in the form of orthophosphate in the composition (C).

In general, the amount in weight of phosphorus, expressed as P₂O₅, in the composition (C) can be measured by known method in the art. Preferably, the amount in weight of phosphorus, expressed as P₂O₅, in the composition (C) is measured according to the standard EN 15959:2023.

Advantageously, the composition (C) comprises, equal to or more than 37.50 wt. %, or equal to or more than 39.00 wt. %, or equal to or more than 40.00 wt. %, or equal to or more than 41.00 wt. %, of P₂O₅tot, relative to the total weight of the composition (C).

It is further understood that the upper limit of P₂O₅tot in the composition (C) is advantageously equal to or less than 49.00 wt. %, or equal to or less than 47.50 wt. %, or equal to or less than 45.00 wt. %, relative to the total weight of the composition (C).

In an embodiment of the composition of the present invention, P₂O₅tot, as detailed above, in the composition (C) ranges from 37.50 wt. % to 49.00 wt. %, or from 39.00 wt. % to 47.50 wt. %, or from 40.00 wt. % to 45.00 wt. % or from 41.00 wt. % to 45.00 wt. %, relative to the total weight of the composition (C).

As said, in the composition (C) according to the present invention, at least 95.00 wt.% of P₂O₅tot is water-soluble, according to the standard EN 15958:2011. According to the present invention, water-soluble is intended to denote that the phosphorus of the composition (C) is able to be dissolved in water.

Advantageously, at least 96.00 wt.%, preferably at least 97.00 wt.%, more preferably at least 98.00 wt.%, preferably at least 99.00 wt.%, most preferably at least 99.50 wt.%, even more preferably at least 99.90 wt.% of P₂O₅tot is water-soluble, according to the standard EN 15958:2011.

In a preferred embodiment of the present invention, in the composition (C) at least 95.00 wt.% of P₂O₅tot is soluble in neutral ammonium citrate, according to the standard EN 15957:2011. According to the present invention, "soluble in neutral ammonium citrate" is intended to denote that the phosphorus of the composition (C) is able to be dissolved in neutral ammonium citrate.

Advantageously, at least 96.00 wt.%, preferably at least 97.00 wt.%, more preferably at least 98.00 wt.%, preferably at least 99.00 wt.%, most preferably at least 99.50 wt.%, even more preferably at least 99.90 wt.% of P₂O₅tot is soluble in neutral ammonium citrate, according to the standard EN 15957:2011.

In a preferred embodiment of the present invention, the composition (C) has a nP_{poly}/nM molar ratio from 1.00 to 30.00 wherein nP_{poly} is a total number of moles of phosphorus in polyphosphate form and wherein nM is a total number of moles of micronutrient in the composition (C). It goes without saying that the definition, as detailed above for the amount in weight of phosphorus in the composition (C), apply for the number of moles of phosphorus in the composition (C). In other words, ${nP}_{tot} = {nP}_{poly} + {nP}_{ortho}$ Wherein
- nPₜₒₜ refers to the total number of moles of phosphorus in the composition (C); and
- nP_{poly} refers to the number of moles of phosphorus in the form polyphosphate in the composition (C); and
- nPₒᵣₜₕₒ refers to the number of moles of phosphorus in the form of orthophosphate in the composition (C).

Preferably, the composition (C) has a nP_{poly}/nM molar ratio from 2.00 to 25.00, preferably from 3.00 to 20.00, preferably from 4.00 to 15.00, or from 5.00 to 12.00, or from 5.00 to 10.00.

Preferably, the polyphosphate is in the form of a powder, granule or mixture thereof. Preferably, the polyphosphate is in the form of a powder. It is further understood that the definition of powder, as described above, equally apply for the polyphosphate.

The inventors have now found that the composition (C) of the present invention, can be safely used in fertigation and can be used efficiently on a wide variety of soils. Indeed, it has been found that when the composition (C), as detailed above, is dissolved in an aqueous solution, the resulting aqueous solution is substantially free of insoluble, as detailed above. Most importantly, the obtained aqueous solution is less prone to form precipitate when used on alkaline soils. The prevention or slowing down of the formation of precipitates is important since these precipitates prevent plants from assimilating properly the nutrients. It was challenging to provide an inorganic composition presenting the correct amounts of macronutrients such as nitrogen, phosphate and potassium to respect the requirements to be used in horticulture while providing additional micronutrients, said composition being suitable to be used in fertigation and on a wide variety of soils, namely a wide range of pH.

The present invention provides a solution for the development of inorganic composition used in fertigation and improving the subsequent nutrient uptake by plants. In view of the public policies regulating the use of some compounds in the field of horticulture, the present invention has an important economic potential.

Advantageously, the composition (C) comprises less than 20.00 wt.% of P₂O₅ ortho, relative to the total weight of the composition (C).

Preferably, the composition (C) comprises equal to or less than 19.00 wt. %; preferably equal to or less than 18.00 wt.%, more preferably equal to or less than 15.00 wt.%, preferably equal to or less than 10.00 wt.%, more preferably equal to or less than 8.50 wt.% of P₂O₅ ortho, relative to the total weight of the composition (C).

It is further understood that the upper limit of P₂O₅ ortho, in the composition (C) is advantageously equal to or more than 0.50 wt. %, or equal to or more than 1.00 wt. %, or equal to or more than 1.50 wt. %, or equal to or more than 2.00 wt. %, or equal to or more than 2.50 wt. %, or equal to or more than 3.00 wt. %, or equal to or more than 4.00 wt. %, or equal to or more than 5.00 wt. %, or equal to or more than 6.00 wt. %, or equal to or more than 7.00 wt. %, or equal to or more than 8.00 wt. %, relative to the total weight of the composition (C).

**In** an embodiment of the composition of the present invention, P₂O₅ ortho, as detailed above, in the composition (C) ranges from 0.50 wt. % to 17.00 wt. %, or from 1.00 wt. % to 15.00 wt. %, or from 1.50 wt. % to 12.00 wt. % or from 2.00 wt. % to 12.00 wt. %, or from 2.50 wt. % to 12.00 wt. %, or from 2.50 wt. % to 10.00 wt. %, or from 2.50 wt. % to 8.50 wt. %, or from 2.50 wt. % to 5.00 wt. %relative to the total weight of the composition (C).

In the context of the present invention, any source of orthophosphate which is capable of providing P₂O₅ ortho, as detailed above, may be used. Preferably, the orthophosphate source is an inorganic orthophosphate source.

For example, P₂O₅ ortho, may be provided to the composition (C) by means of at least one orthophosphate salt. In general, orthophosphate salts are known to the skilled person in the art.

Within the context of the present invention, the expression "at least one orthophosphate salt" is intended to denote one orthophosphate salt or more than one orthophosphate salt. Mixtures of orthophosphate salt may be used.

For the purpose of the invention, the term "orthophosphate salt" refers herein to a salt of orthophosphoric acid, wherein the term "orthophosphoric acid" refers herein to compounds having the general formula (1) wherein n=1.

Preferably, the orthophosphate is provided to the composition (C) by means of at least one orthophosphate salt selected from the group consisting of monopotassium phosphate, monoammonium phosphate (MAP), diammonium phosphate (DAP), dipotassium phosphate, hemipotassium phosphate, monosodium phosphate and mixture thereof. Preferably, the orthophosphate salt is selected from the group consisting of monopotassium phosphate (MKP), dipotassium phosphate (DKP), hemipotassium phosphate (HKP), monosodium phosphate and mixture thereof. Preferably, the orthophosphate salt is selected from the group consisting of monopotassium phosphate (MKP), dipotassium phosphate (DKP), hemipotassium phosphate (HKP) and mixture thereof. Within the context of the present invention, orthophosphate salts may be in an anhydrous form and/or in a hydrated form.

Advantageously, the composition (C) according to the present invention further has a molar ratio nN/nPₜₒₜ equal to or less than 0.20, wherein nN is the total number of moles of nitrogen in the composition (C) and nPₜₒₜ is the total number of moles of phosphorus in the composition (C).

Advantageously, the composition (C) according to the present invention further has a molar ratio nN/nPₜₒₜ equal to or less than 0.15, preferably equal to or less than 0.10, more preferably equal to or less than 0.05, more preferably equal to or less than 0.01, most preferably equal to 0.00.

In an embodiment of the composition of the present invention, the composition (C) according to the present invention further has a molar ratio nN/nPₜₒₜ comprised between 0.00 and 0.20, or between 0.01 and 0.15, or between 0.05 and 0.15 or between 0.05 and 0.10.

Advantageously, the composition (C) further comprises iron in an amount equal to or more than 0.10 wt.%, relative to the total weight of the composition (C).

It goes without saying that the content of iron refers to the atomic Fe content.

In the context of the present invention, any source of iron which is capable of providing iron, as detailed above, may be used. Preferably, the source of iron is an inorganic source of iron.

For example, iron can be provided to the composition (C) by means of at least one iron salt. Within the context of the present invention, the expression "at least one iron salt" is intended to denote one iron salt or more than iron salt. Mixtures of iron salt may be used.

In general, iron salts are known to the skilled person in the art. Non-limiting examples of iron salts notably include chloride salt, sulfate salt, nitrate salt, phosphate salt, ammonium phosphate salt, , bromide salt, oxide, hydroxide, oxide-hydroxide salt, nitrate salt, oxysulfate salt. Within the context of the present invention, iron salts may be in an anhydrous form and/or in a hydrated form.

Preferably, iron is provided to the composition (C) by means of at least one iron salt selected from the group consisting of iron sulfate, iron oxide, iron pyrophosphate, iron phosphate, iron chloride, ammonium iron phosphate and mixture thereof. Preferably, iron is provided to the composition (C) by means of at least one iron salt selected from the group consisting of iron sulfate, iron oxide, iron pyrophosphate, iron phosphate, iron chloride, and mixture thereof.

When iron is provided to the composition (C) by means of an iron sulfate salt, said iron sulfate salt may be selected from the group consisting of Fe₂(SO₄)₃.xH₂O wherein x ranges from 0 to 9, FeSO₄.xH₂O wherein x ranges from 0 to 7, MFe(SO₄)₂.12H₂O where M is Na or K and mixture thereof.

When iron is provided to the composition (C) by means of an iron phosphate salt, said iron phosphate salt may be FePO₄.xH₂O wherein x ranges from 0 to 4.

When iron is provided to the composition (C) by means of an iron nitrate salt, said iron nitrate salt may be Fe(NO₃)₃.xH₂O wherein x ranges from 0 to 9.

When iron is provided to the composition (C) by means of an iron chloride salt, said iron chloride salt may be selected from the group consisting of FeCl₃.xH₂O wherein x ranges from 0 to 6,FeCl₂.xH₂O wherein x ranges from 0 to 4 and mixture thereof.

When iron is provided to the composition (C) by means of an iron oxide salt, said iron oxide salt may be FeO.xH₂O wherein x ranges from 0 to 1.

Advantageously, iron is present in the composition (C) in an amount equal to or more than 0.20 wt.%, preferably equal to or more than 0.50 wt.%, more preferably equal to or more than 0.70 wt.%, even more preferably equal to or more than 1.00 wt.%, more preferably equal to or more than 1.50 wt.%, even more preferably equal to or more than 2.00 wt.%, more preferably equal to or more than 2.50 wt.%, and most preferably equal to or more than 3.00 wt.%, relative to the total weight of the composition (C).

It is further understood that the upper limit of iron in the composition (C) is advantageously equal to or less than 10.0 wt. %, preferably equal to or less than 9.50 wt.%, preferably equal to or less than 9.00 wt.%, more preferably equal to or less than 8.50 wt.%, even more preferably equal to or less than 8.00 wt.%, more preferably equal to or less than 7.50 wt.%, even more preferably equal to or less than 6.50 wt.%, more preferably equal to or less than 6.00 wt.%, even more preferably equal to or less than 5.50 wt.% and most preferably equal to or less than 5.00 wt.%, relative to the total weight of the composition (C).

In an embodiment of the composition of the present invention, iron as detailed above, is present in the composition (C) in an amount from 0.10 to 10.0 wt.%, preferably from 0.20 to 9.00 wt.%, more preferably from 0.50 to 8.50 wt.%, even more preferably from 0.70 to 8.00 wt.%, more preferably from 1.00 to 7.50 wt.%, more preferably between 1.00 to 6.50 wt.%, even more preferably from 1.50 to 6.00 wt.%, preferably from 1.00 to 5.00 wt.%, preferably from 1.50 to 5.00 wt.%, more preferably from 2.00 to 5.50 wt.%, even more preferably from 2.00 to 5.00 wt.% or from 2.50 to 5.00 wt.%, relative to the total weight of the composition (C).

Advantageously when the micronutrient is zinc and the composition (C) further comprises iron, the sum of the amounts of zinc and iron is equal to or more than 0.60 wt. %, preferably equal to or more than 1.00 wt. %, preferably equal to or more than 1.20 wt. %, or equal to or more than 1.50 wt. %, relative to the total weight of the composition (C).

Advantageously, it is further understood that when the micronutrient is zinc and the composition (C) further comprises iron the upper limit of the sum of the amounts of zinc and iron in the composition (C) is advantageously equal to or less than 15.00 wt.%, preferably equal to or less than 10.00 wt. %, or equal to or less than 7.00 wt. %, or equal to or less than 5.00 wt. %, or equal to or less than 4.00 wt.%, or equal to or less than 3.00 wt.%, or equal to or less than 2.00 wt.%, relative to the total weight of the composition (C).

**In** an embodiment of the composition of the present invention, when the micronutrient is zinc and the composition (C) further comprises iron, the sum of the amounts of zinc and iron in the composition (C) is from 0.10 to 15.0 wt.%, preferably 0.10 to 10.0 wt.%, preferably from 0.20 to 9.00 wt.%, more preferably from 0.50 to 8.50 wt.%, even more preferably from 0.70 to 8.00 wt.%, more preferably from 1.00 to 7.50 wt.%, more preferably between 1.00 to 6.50 wt.%, even more preferably from 1.50 to 6.00 wt.%, preferably from 1.00 to 5.00 wt.%, preferably from 1.50 to 5.00 wt.%, more preferably from 2.00 to 5.50 wt. %, even more preferably from 2.00 to 5.00 wt.% or from 2.50 to 5.00 wt.%, relative to the total weight of the composition (C).

Advantageously when the micronutrient is copper and the composition (C) further comprises iron, the sum of the amounts of copper and iron is equal to or more than 0.60 wt. %, preferably equal to or more than 1.00 wt. %, preferably equal to or more than 1.20 wt. %, or equal to or more than 1.50 wt. %, relative to the total weight of the composition (C).

Advantageously, it is further understood that when the micronutrient is copper and the composition (C) further comprises iron the upper limit of the sum of the amounts of copper and iron in the composition (C) is advantageously equal to or less than 15.00 wt.%, preferably equal to or less than 10.00 wt. %, or equal to or less than 7.00 wt. %, or equal to or less than 5.00 wt. %, or equal to or less than 4.00 wt.%, or equal to or less than 3.00 wt.%, or equal to or less than 2.00 wt.%, relative to the total weight of the composition (C).

**In** an embodiment of the composition of the present invention, when the micronutrient is copper and the composition (C) further comprises iron, the sum of the amounts of copper and iron in the composition (C) is from 0.10 to 15.0 wt.%, preferably 0.10 to 10.0 wt.%, preferably from 0.20 to 9.00 wt.%, more preferably from 0.50 to 8.50 wt.%, even more preferably from 0.70 to 8.00 wt.%, more preferably from 1.00 to 7.50 wt.%, more preferably between 1.00 to 6.50 wt.%, even more preferably from 1.50 to 6.00 wt.%, preferably from 1.00 to 5.00 wt.%, preferably from 1.50 to 5.00 wt.%, more preferably from 2.00 to 5.50 wt.%, even more preferably from 2.00 to 5.00 wt.% or from 2.50 to 5.00 wt.%, relative to the total weight of the composition (C).

Advantageously, the composition (C) may be used in admixture with at least one additional compound. Within the context of the present invention, the expression "at least one additional compound" is intended to denote one additional compound or more than one additional compound. Mixtures of additional compounds may be used.

Preferably, the additional compound selected from the group consisting of hemipotassium phosphate (HKP), monopotassium phosphate (MKP), monopotassium sodium (MSP), potassium sulfate (SOP), and mixture thereof may be added to the composition (C) thereby forming a composition (D). Preferably, the additional compound is added in an amount equal to or less than 10.00 wt.%, relative to the total weight of the composition (D). Preferably, this additional compound is a commercially available fertilizer. **In** other words, the composition (C) may be use in admixture with at least one commercially available fertilizer.

Advantageously, the composition (C) according to the present invention is soluble in an aqueous solvent. **In** other words, the composition (C) is soluble or is substantially soluble in an aqueous solvent. Preferably, the aqueous solvent is water. For the purpose of the invention, this means that, after having dissolved the composition (C) in an aqueous solvent, there is preferably no precipitation in the resulting aqueous solution. **In** other words, the composition (C), after being dissolved in an aqueous solvent, provides an aqueous solution comprising less than 1.00 wt.%, more preferably less than 0.20 wt.%, more preferably less than 0.10 wt.%, most preferably less than 0.05 wt.% of insoluble, relative to the total weight of the composition (C). Preferably, the amount of insoluble is measured in an aqueous solution obtained by dissolving the composition (C) in an aqueous solvent, wherein the aqueous solution comprises 10.00 wt. % of the composition (C), relative to the total weight of the aqueous solution.

It is understood that the skilled person in the art will measure the amount of insoluble according to standard and general practice known by said skilled person in the art. Preferably, unless otherwise mentioned or indicated, according to the present invention, the measurement of insoluble is performed at room temperature, by weighting 20.00 g of a sample of the composition (C), m_{E}. Then, the method comprises diluting this sample by adding 200 ml of ultrapure water and agitating during 10 minutes for forming an aqueous solution. The aqueous solution is then filtered on a 0.45 µm filter which is then rinsed with 150 ml of water. The filter is placed in an oven at 105 °C for 30 minutes. Finally, the filter is cooled to room temperature in a desiccator. The cooled filter is weighted.

The insoluble content in wt.% is: $Insolubles \left(wt.%\right) = \frac{\left({m}_{1}-{m}_{0}\right)}{{m}_{E}} \times 100$ Wherein
- m_{E}: mass of the sample of the composition (C)
- mₒ: mass of the filter before filtration
- m₁: mass of the filter after filtration and cooling

Advantageously, the composition (C), after being dissolved in an aqueous solvent, provides an aqueous solution having a turbidity equal to or less than 60 NTU (Nephelometric Turbidity Unit), preferably equal to or less than 50 NTU, or equal to or less than 40 NTU, or equal to or less than 30 NTU, or equal to or less than 20 NTU. Preferably, the turbidity is measured in an aqueous solution obtained by dissolving the composition (C) in an aqueous solvent, wherein the aqueous solution comprises 10.00 wt. % of the composition (C), relative to the total weight of the aqueous solution. Preferably, the aqueous solvent is water. It is understood that the skilled person in the art will measure the turbidity according to standard and general practice known by said skilled person in the art. Preferably, unless otherwise mentioned or indicated, according to the present invention, the measurement of turbidity is performed at room temperature, by weighting 20.00 g of a sample of the composition (C). Then, the method comprises diluting this sample by adding 200 ml of ultrapure water and agitating during 10 minutes for forming an aqueous solution. A nephelometer (HACHRatio/XR) is used to measure turbidity expressed in NTU. The turbidity may be measured on the same aqueous solution sample than the amount of insoluble, as detailed above, provided that the turbidity is measured prior to the filtration step of the protocol for measuring the amount of insoluble, as detailed above.

Advantageously, the composition (C) is prepared by mixing the various components comprised in the composition (C), as detailed above. Furthermore, it is understood that any order of mixing of the various components as comprised in the composition (C), as detailed above, is acceptable.

Generally said mixing, as detailed above, may be carried out by using a variety of mixing means known in the art. Non-limiting examples of such mixing means notably include mechanical mixing such as traditional mixers and blenders and high intensity mixers. A high sheer force can be applied during the mixing in order to improve the homogeneity of the composition (C).

**It** is understood that the skilled person in the art will carry out said intimate mixing according to general practice such as notably using optimal times, weights, volumes and batch quantities.

Preferably, said mixing is carried out until a homogeneous mixture is obtained.

An aqueous solution comprising the composition (C), as detailed above, is another aspect of the present invention. **It** is further understood that all definitions and preferences, as described above, equally apply for the aqueous solution.

Advantageously, the amount of the composition (C) according to the present invention in the aqueous solution is equal to or more than 0.50 wt.%, preferably equal to or more than 2.00 wt.%, preferably equal to or more than 4.00 wt.%, more preferably equal to or more than 6.00 wt.%, preferably equal to or more than 8.00 wt.%, preferably equal to or more than 10.00 wt.%, more preferably equal to or more than 12.00 wt.%, preferably equal to or more than 14.00 wt.%, preferably equal to or more than 15.00 wt.%, preferably equal to or more than 16.00 wt.%, preferably equal to or more than 17.00 wt.%, preferably equal to or more than 18.00 wt.%, preferably equal to or more than 19.00 wt.%, preferably equal to or more than 20.00 wt.%, more preferably equal to or more than 21.00 wt.%, preferably equal to or more than 22.00 wt.%, preferably equal to or more than 23.00 wt.%, preferably equal to or more than 24.00 wt.%, most preferably equal to or more than 25.00 wt.%, relative to the total weight of the aqueous solution.

**It** is further understood that the upper limit of the composition (C), as detailed above, in the aqueous solution is advantageously equal to or less than 40.00 wt.%, preferably equal to or less than 37.00 wt.%, preferably equal to or less than 35.00 wt.%, preferably equal to or less than 32.00 wt.%, preferably equal to or less than 30.00 wt.%, preferably equal to or less than 27.00 wt.%, preferably equal to or less than 25.00 wt.%, preferably equal to or less than 22.00 wt.%, preferably equal to or less than 20.00 wt.%, preferably equal to or less than 17.00 wt.%, preferably equal to or less than 15.00 wt.%, preferably equal to or less than 14.00 wt.%, preferably equal to or less than 13.00 wt.%, preferably equal to or less than 12.00 wt.%, preferably equal to or less than 10.00 wt.%, relative to the total weight of the aqueous solution.

In an embodiment of the present invention, the amount of the composition (C) according to the present invention, in the aqueous solution is comprised between 0.5 and 40.00 wt.%, preferably between 2.00 and 37.00 wt.%, preferably between 4.00 and 35.00 wt.%, preferably between 6.00 and 32.00 wt.%, preferably between 8.00 and 30.00 wt %, preferably between 8.00 and 27.00 wt.%, preferably between 8.00 and 25.00 wt.%, preferably between 8.00 and 22.00 wt.%, preferably between 10.00 and 27.00 wt.%, preferably between 10.00 and 25.00 wt.%, relative to the total weight of the aqueous solution.

An aqueous solution obtained by dissolving the composition (C) in an aqueous solvent is another aspect of the invention. Preferably the aqueous solvent is water.

Advantageously, the aqueous solution comprises less than 1.00 wt.%, more preferably less than 0.20 wt.%, more preferably less than 0.10 wt.%, most preferably less than 0.05 wt.% of insoluble, relative to the total weight of the composition (C). Preferably, the amount of insoluble is measured in an aqueous solution comprising 10.00 wt. % of the composition (C), relative to the total weight of the aqueous solution.

Advantageously, the aqueous solution has a turbidity equal to or less than 60 NTU (Nephelometric Turbidity Unit), preferably equal to or less than 50 NTU, or equal to or less than 40 NTU, or equal to or less than 30 NTU, or equal to or less than 20 NTU. Preferably, the turbidity is measured in an aqueous solution comprising 10.00 wt. % of the composition (C), relative to the total weight of the aqueous solution.

The use of the composition (C), as detailed above, in an aqueous solution in fertigation is another aspect of the invention.

It is further understood that all definitions and preferences, as described above, equally apply for the use of the composition (C) in an aqueous solution in fertigation.

### EXAMPLES

The invention will be now described in more details with reference to the following examples, whose purpose is merely illustrative and not intended to limit the scope of the invention.

### Test methods

### Measurements of phosphorous content

The measurements of the amount of phosphorous in the composition were performed according to the standard EN 15959: 2023.

### Measurements of water-soluble phosphorous

The measurements of the amount of water-soluble phosphorous in the composition were performed according to the standard EN 15958: 2023.

### Measurement of insoluble in aqueous solution

The measurements of insoluble in aqueous solutions were performed as detailed above.

### Measurement of turbidity in aqueous solution

An aqueous solution was prepared as described here below. After the given stir time, the turbidity was measured at room temperature using a laboratory nephelometer (Hanna Instruments).

### Measurement of pH in aqueous solution

An aqueous solution was prepared as described here below. After the given stir time, the pH was measured using a laboratory pH meter (Knick Portamess 911 - battery-operated).

### Composition (C)

Five compositions were prepared by mixing the components presented in table 1.

**Table 1 : compositions used in the examples**

| | C1 | C2 | C3 | C4 | C5 |
|---|---|---|---|---|---|
| Polyphosphate* | yes | No | No | yes | yes |
| Micronutrient (wt. %), Zn | 3.5 | 3.5 | 3.5 | 3.5 | 3.5 |
| K, expressed as K₂O (wt.%) | 48.5 | 31.0 | 0.0 | 45.0 | 43.0 |
| N (wt. %) | 0.0 | 0.0 | 0.0 | 0.0 | 0.0 |
| P₂O₅ tot (wt. %) | 42.3 | 46.7 | 0.0 | 42.0 | 43.0 |
| Water-soluble P₂O₅ tot (wt. %) | 42.3 | 46.7 | 0.0 | 42.0 | 43.0 |
| P₂O₅ ortho (wt. %) | 6.4 | 46.7 | 0.0 | 9.0 | 15.0 |
| wt.% are expressed relative to the total weight of the composition | | | | | |
| * the polyphosphate is a potassium tripolyphosphate (KTPP) | | | | | |

### Dissolution of Composition (C)

A pre-weighed amount of one of compositions (C) was added to a beaker containing a sufficient amount of demineralized water at 20°C, and stirred magnetically for 15 minutes at 400 **rpm.**

### pH variation in the aqueous solution

For each pH value provided in the examples below, the pH of the aqueous solution was adjusted by adding a sufficient amount of HNO₃ 69% or NaOH 10N and stirring magnetically, at room temperature, the aqueous solution until the equilibrium.

### Example 1 (E1):

An aqueous solution was prepared, as detailed above, by using 10 wt.% of C1, relative to the total weight of the aqueous solution. The pH of the aqueous solution was adjusted, as detailed above, from 3.5 until 8.6. For each value of pH, the content of insoluble was measured, as detailed above. After filtration, as detailed above, the content of Zn was measured in the filtrate (liquid phase) in wt.%, relative to the total weight of Zn in the composition (C). This measurement provides thus an indication on the content (wt. %) of Zn soluble when the composition (C) is dissolved in an aqueous solution. Fig. 1 demonstrates that in the aqueous solution Zn remains soluble until a pH of 8.6. The composition C1 is thus suitable for fertigation.

### Counter-Example 2 (E2):

Counter-Example 2 was performed as example 1 except that C2 does not contain any polyphosphate.

As shown in Figure 1, for the composition C2, the content of Zn soluble drops drastically from a pH of 3.9 and is 1.9 wt.% from a pH of 4.5. This demonstrates that the composition C2 which does not contain any polyphosphate is not suitable for fertigation.

### Counter-Example 3 (CE3):

Counter-Example 3 was performed as example 1 except that C3 does not contain any phosphorus content. As shown in Figure 1, for the composition C3, the content of Zn soluble drops drastically from a pH of 6.2. This demonstrates that the composition C3 which does not contain any polyphosphate is not suitable for fertigation.

### Example 4 (E4):

An aqueous solution was prepared, as detailed above, by using (1) 1 wt.% (2) 10 wt.% and (3) 25 wt.% of C4, relative to the total weight of the aqueous solution.

The results are shown in table 2. Table 2 demonstrates that it is possible to provide aqueous solutions suitable for fertigation with composition C4.

### Example 5 (E5):

Example 5 was performed as example 4 except that C5 was used instead of C4. The results are shown in table 2. Table 2 demonstrates that it is possible to provide aqueous solutions suitable for fertigation with composition C5.

**Table 2: Results of Example 5 and Example 6**

| Composition (C) | C4 | C4 | C4 | C5 | C5 | C5 |
|---|---|---|---|---|---|---|
| wt. % of compo (C) in the aqueous solution* | 1 | 10 | 25 | 1 | 10 | 25 |
| Precipitate | No | No | No | No | No | No |
| NTU | 3 | 24 | 57 | 3 | 25 | 55 |
| pH | 7.18 | 6.81 | 6.80 | 7.75 | 7.40 | 7.35 |
| * relative to the total weight of the aqueous solution. | | | | | | |

## Claims

1. A solid inorganic nutrient composition suitable for fertigation [composition (C), herein after] comprising at least one polyphosphate and comprising, relative to the total weight of the composition (C):
- from 0.50 to 20.00 % by weight [wt. %, herein after] of at least one micronutrient selected from the group consisting of manganese, zinc, molybdenum, copper, boron, cobalt and mixture thereof; and
- from 20.00 to 60.00 wt.% of potassium, expressed as K₂O; and
- equal to or less than 1.00 wt. % of nitrogen; and
- from 35.00 to 50.00 wt.% of total phosphorus, expressed as P₂O₅, [P₂O₅ tot, herein after] wherein at least 95.00 wt.% of P₂O₅ tot is water-soluble, according to the standard EN 15958:2011.

2. The composition (C) according to claim 1 wherein the micronutrient is provided to the composition (C) by means of at least one micronutrient salt selected from the group consisting of manganese sulfate, manganese chloride, manganese oxide, zinc sulfate, zinc oxide, zinc chloride, copper sulfate, copper hydroxide and copper chloride.

3. The composition (C) according to claim 1 or claim 2 wherein potassium is provided to the composition (C) by means of at least one potassium salt selected from the group consisting of potassium chloride, potassium sulfate, potassium nitrate, potassium orthophosphate and potassium polyphosphate.

4. The composition (C) according to any one of the claims 1 to 3 wherein the polyphosphate is provided to the composition (C) by means of at least one polyphosphate salt selected from the group consisting of sodium polyphosphate, potassium polyphosphate and potassium sodium polyphosphate.

5. The composition (C) according to any one of the claims 1 to 4 wherein the polyphosphate is provided to the composition (C) by means of at least one polyphosphate salt selected from the group consisting of tetrapotassium pyrophosphate (TKPP), potassium tripolyphosphate (KTPP), sodium tripolyphosphate (STPP) and tetrasodium pyrophosphate (TSPP).

6. The composition (C) according to any one of the claims 1 to 5 wherein in the composition (C) at least 95.00 wt.% of P₂O₅tot is soluble in neutral ammonium citrate, according to the standard EN 15957:2011.

7. The composition (C) according to any one of the claims 1 to 6 wherein the composition (C) has a nP_{poly}/nM molar ratio from 1.00 to 30.00 wherein nP_{poly} is a total number of moles of phosphorus in polyphosphate form and wherein nM is a total number of moles of micronutrient in the composition (C).

8. The composition (C) according to any one of the claims 1 to 7 wherein the composition (C) comprises less than 20.00 wt.% of P₂O₅ ortho, relative to the total weight of the composition (C).

9. The composition (C) according to claim 8 wherein the composition (C) comprises an orthophosphate and the orthophosphate is provided to the composition (C) by means of at least one orthophosphate salt selected from the group consisting of monopotassium phosphate (MKP), dipotassium phosphate (DKP), hemipotassium phosphate (HKP) and monosodium phosphate.

10. The composition (C) according to any one of the claims 1 to 9 wherein the composition (C) has a molar ratio nN/nPₜₒₜ equal to or less than 0.20, wherein nN is the total number of moles of nitrogen in the composition (C) and nPₜₒₜ is the total number of moles of phosphorus in the composition (C).

11. The composition (C) according to any one of the claims 1 to 10 wherein the composition (C) further comprises iron in an amount from 0.10 to 10.00 wt.%, relative to the total weight of the composition (C).

12. The composition (C) according to claim 11 wherein iron is provided to the composition (C) by means of at least one iron salt selected from the group consisting of iron sulfate, iron oxide, iron pyrophosphate, iron phosphate and iron chloride.

13. An aqueous solution obtained by dissolving the composition (C) in an aqueous solvent, wherein the aqueous solution comprises less than 0.20 wt.% of insoluble, relative to the total weight of the composition (C).

14. The aqueous solution according to claim 13, wherein the aqueous solution has a turbidity equal to or less than 60 NTU.

15. An use of the composition (C) according to any one of claims 1 to 12 in an aqueous solution in fertigation.
